# NEUE EUROPÄISCHE PATENTSCHRIFT

(11) **EP 1 035 530 B2**
(45) Veröffentlichungstag und Bekanntmachung des Hinweises auf die Entscheidung über den Einspruch: **23.11.2005**
(45) Hinweis auf die Patenterteilung: 18.12.2002
(21) Anmeldenummer: 00103739.9
(22) Anmeldetag: 23.02.2000
(51) Int. Cl.: H04H 1/00, G10L 17/00

(54) **Audiosystem mit automatischer Einstellung benutzerabhängiger Systemparameter**
Audio system with automatic setting of user-dependent system parameters
Système et audio avec ajustement automatique de paramètres de système dépendant de l'utilisateur

(30) Priorität: 11.03.1999 DE 19910760
(43) Veröffentlichungstag der Anmeldung: 13.09.2000
(73) Patentinhaber: SIEMENS AKTIENGESELLSCHAFT, 80333 München (DE)
(72) Erfinder: Troedel, Bernhard, 35606 Solms (DE)

(56) Entgegenhaltungen:
- EP-A- 0 582 081
- EP-A- 0 648 653
- EP-A- 1 004 851
- PATENT ABSTRACTS OF JAPAN vol. 1998, no. 09, 31. Juli 1998 (1998-07-31) & JP 10 088878 A (FUJITSU TEN LTD), 7. April 1998 (1998-04-07)
- PATENT ABSTRACTS OF JAPAN vol. 1998, no. 11, 30. September 1998 (1998-09-30) & JP 10 166956 A (FUJITSU TEN LTD), 23. Juni 1998 (1998-06-23)
- PATENT ABSTRACTS OF JAPAN vol. 017, no. 652 (M-1520), 3. Dezember 1993 (1993-12-03) & JP 05 213117 A (FUJITSU TEN LTD), 24. August 1993 (1993-08-24)
- PATENT ABSTRACTS OF JAPAN vol. 1998, no. 05, 30. April 1998 (1998-04-30) & JP 10 026538 A (ALPINE ELECTRON INC), 27. Januar 1998 (1998-01-27)
- PATENT ABSTRACTS OF JAPAN vol. 1996, no. 06, 28. Juni 1996 (1996-06-28) & JP 08 044387 A (AQUEOUS RES:KK), 16. Februar 1996 (1996-02-16)
- PATENT ABSTRACTS OF JAPAN vol. 1996, no. 08, 30. August 1996 (1996-08-30) & JP 08 110238 A (MATSUSHITA ELECTRIC IND CO LTD), 30. April 1996 (1996-04-30)
- Journal of the Electronics Industry, Heft 3, März 1992, S. 22 - 24
- Journal of the Electronics Industry, Heft 9, September 1993, S. 40 - 41
- BARTON S.; MAIER T.; WESSELING S.: 'Spracherkennung', Vorlesungsskript Wintersemester 1996/97, FH Friedberg, Kapitel 3, 3.1 und 8

## Beschreibung

Die Erfindung betrifft ein Audio system eines Kraftfahrzeuges mit einer Bedieneinheit zur Einstellung von Systemparametern durch einen Benutzer.

Audiosysteme gehören zu den am weitesten verbreiteten Informations- und Komfortsystemen in Kraftfahrzeugen. Sie weisen eine Bedieneinheit zur Einstellung unterschiedlicher Systemparameter auf. Hierzu gehören beispielsweise die Einstellung des gewünschten Radiosenders, der Lautstärke oder des Klanges. Weiterhin kann beispielsweise auch die automatische Einblendung von Verkehrsdurchsagen bei laufendem CD-oder Kassettenbetrieb wählbar sein.

Navigationssysteme gehören zu den moderneren Informationssystemen in Kraftfahrzeugen. Nach Eingabe eines Zielortes berechnen die Systeme eine Fahrroute und geben während der Fahrt die erforderlichen Anweisungen an den Fahrer aus. Für eine dynamische Routenauswahl, das heißt eine Routenauswahl unter Berücksichtigung der sich ändernden Verkehrsverhältnisse, können die Navigationssysteme mit einem Audiosystem verbunden sein. Hierdurch können über Rundfunk ausgestrahlte Verkehrsmeldungen über das Audiosystem direkt dem Navigationssystem zugeleitet und bei der Routenbestimmung berücksichtigt werden.

Auch das Navigationssystem weist eine Bedieneinheit auf. Über die Bedieneinheit können beispielsweise Zielorte aus einem Adressbuch ausgewählt werden. Ferner kann die vom Fahrer bevorzugte Informationsdarstellung gewählt werden. So ist beispielsweise die Darstellung von Kartenausschnitten oder die Darstellung von Pfeilen, die zum Beispiel auf einen Abbiegevorgang hinweisen, möglich. Ein Audio- und ein Navigationssystem können auch in einer gemeinsamen Einheit mit einer einzigen Bedieneinheit vorhanden sein.

Wird das Fahrzeug von verschiedenen Fahrern benutzt, so werden diese auch verschiedene Systemeinstellungen des Audio systems bevorzugen. Dies hat zur Folge, dass jeder Benutzer vor Fahrtantritt seine persönlich bevorzugten Systemeinstellungen vornehmen wird. Dieser Vorgang ist zum einen zeitaufwendig, zum anderen muss die Einstellung der Systemparameter bei eingeschaltetem Audio system erfolgen. In vielen Fällen werden die Einstellungen daher bei laufendem Motor vorgenommen. Dies ist aus Umweltgründen jedoch nicht wünschenswert.

Aus der JP-A-10088878 ist es bekannt, einen Fahrer anhand des verwendeten Fahrzeugschlüssels zu identifizieren und ein Gerät in einem Kraftfahrzeug mit abgespeicherten Werten für den identifizierten Fahrer zu betreiben, beispielsweise die Lautstärke eines Radios einzustellen.

Aus "Journal of the Electronic Industry "(JEI), Band 39, Nr. 3, März 1992 , S. 22 - 24 und "Journal of the Electronic Industry" (JEI), Band 40, Nr. 9, September 1993, S. 40-41 ist ein benutasabhängiges Spracheskennungssystem bekannt, mittles dessen ein Audiosystem eines Kraftfahrzeugs bedient werden kann.

Hier setzt nun die vorliegende Erfindung ein, die es sich zur Aufgabe gemacht hat, ein Audio system mit vereinfachter Bedienung, insbesondere bei Benutzung des Fahrzeuges durch mehrere Nutzer, so weiterzubilden, dass eine höhere Sicherheit in der Fahrererkennung erreicht wird.

Die Aufgabe wird durch ein Audio system nach Anspruch 1 gelöst.

Durch die erfindungsgemäße Ausgestaltung eines Audio systems entfällt die regelmäßige, zeitaufwendige, manuelle Eingabe von Systernparametern vor der Fahrt durch den Benutzer. Hierdurch wird bei Fahrzeugen, die regelmäßig von verschiedenen Personen benutzt werden, ein deutlicher Komfortgewinn erzielt. Jeder Benutzer des Fahrzeuges muss nur einmal seine gewünschten Systemparameter an den Einstellelementen des Audio systems vornehmen und diese anschließend in einem Speicherelement abspeichern. Das Speicherelement kann sowohl ein Bestandteil des Audio systems sein oder auch extern angeordnet sein. Hat der Benutzer seine bevorzugten Systemparameter einmal im Speicherelement abgespeichert, so werden diese jeweils wieder eingestellt, sobald durch die Mittel zur Identifizierung des Benutzers dieser identifiziert worden ist. Die Identifizierung des Benutzers erfolgt dabei Spracherkennung. Hierzu muss das Audiosystem mit einem Spracherkennungssystem in Wechselwirkung stehen. Der Fahrer spricht ein oder wenige Worte, um von dem Spracherkennungssystem identifiziert zu werden. Wird der Benutzer durch das Spracherkennungssystem erkannt, so wird die Information über seine Identität an das Audiosystem weitergereicht, so dass die zugehörigen Systemparameter ausgewählt und eingestellt werden können.

Ein erfindungsgemäßes Verfahren zur Einstellung von benutzerbezogenen Systemparametem eines Audio systems eines Kraftfahrzeuges ist dadurch gekennzeichnet, dass der Benutzer auf Grund von Spracherkennung identifiziert wird, abhängig vom identifizierten Benutzer Systemparameter aus einem Speicherelement ausgelesen werden und das Audio system mit den ausgelesenen Systemparametern eingestellt wird.

Die Erfindung wird nachfolgend anhand von Ausführungsbeispielen und der Zeichnung näher erläutert. Es zeigen:
- Figur 1: eine schematische Darstellung eines erfindungsgemäßen Systems,
- Figur 2: ein erfindungsgemäßes Audiosystem mit Benutzeridentifizierung durch Spracherkennung.

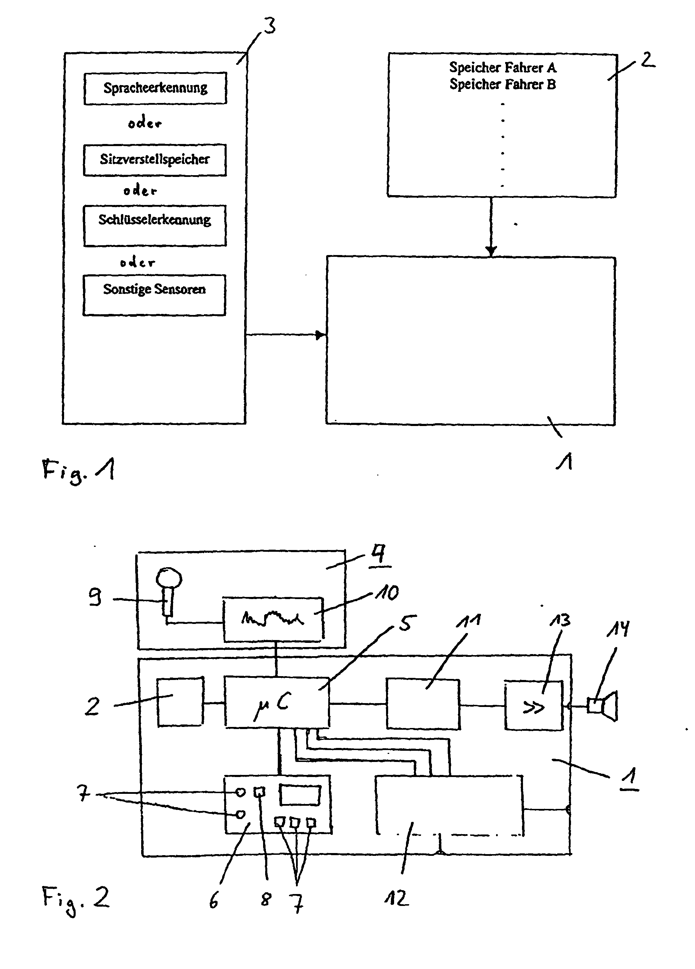

Gemäß Figur 1 steht das Audio system 1 mit einem Speicherelement 2 sowie Mitteln 3 zur Identifizierung des Benutzers in Wechselwirkung. In dem Speicherelement 2 sind für verschiedene Benutzer A, B, C,... die bevorzugten Systemparameter abgelegt. Bei den Mitteln 3 zur Identifizierung des Benutzers handelt es sich um ein Spracherkennungssystem. Die Identifizierung eines Benutzers anhand eines Schlüsselerkennungssystems, eines Sitzverstellspeichers oder sonstiger Sensoren ist nicht Teil des beanspruchten Erfindung. Durch das Audio system werden dann die im Speicherelement 2 abgespeicherten benutzerbezogenen Systemparameter für den Benutzer B abgerufen und eingestellt. Eine manuelle Einstellung der bevorzugten Systemparameter durch den Benutzer kann somit entfallen.

In Figur 2 ist ein erfindungsgemäßes Audiosystem 1 dargestellt, das mit einem Spracherkennungssystem 4 in Wechselwirkung steht. Das Audiosystem 1 beinhaltet einen Mikroprozessor 5, der mit einer Bedieneinheit 6 verbunden ist. Die Bedieneinheit 6 enthält verschiedene Einstellelemente 7 zur Einstellung spezieller Systemparameter des Audiosystems. Hierbei kann es sich beispielsweise um Einstellelemente für die Lautstärke, des Senders, des Klanges, des Empfangs von Verkehrsnachrichten, der Wiedergabe einer CD oder Musikkassette und dergleichen handeln. Mit Hilfe der Einstellelemente 7 stellt der Benutzer seine bevorzugten Systemparameter ein und speichert diese durch Betätigen des Speicherknopfes 8 im Speicherelement 2, das ebenfalls mit dem Mikrocomputer 5 verbunden ist, ab. Anschließend muß noch die Zuordnung einer Benutzeridentifizierung zu den abgespeicherten Daten erfolgen. Hierzu spricht der Benutzer wenige Worte, die von dem Mikrofon 9 des Spracherkennungssystems 4 aufgenommen und an eine Auswerteeinheit 10 des Spracherkennungssystems 4 weitergeleitet werden. Das Spracherkennungssystem 4 teilt dem registrierten Sprachmuster einen Benutzercode zu und übergibt diesen an den Mikrocomputer 5 des Audiosystems 1. Durch nochmaliges Drücken der Speichertaste 8 kann der Benutzercode den zuvor im Speicherelement 2 abgespeicherten benutzerspezifischen Systemparametern zugeordnet werden. Im Speicherelement 2 ist somit ein Datenpaar bestehend aus Benutzercode und benutzerspezifischen Systemparametern abgelegt. Der beschriebene Vorgang muß nur ein einziges Mal von jedem Benutzer vorgenommen werden. Das erwähnte Spracherkennungssystem ist nicht Gegenstand dieser Erfindung und braucht daher auch nicht näher erläutert zu werden.

Benutzt der Benutzer erneut das Fahrzeug, so muß er sich zunächst nur durch Sprechen eines oder weniger Worte, die von dem Mikrofon 9 aufgenommen und von der Auswerteeinheit 10 ausgewertet werden, identifizieren. Kann der Benutzer durch das Spracherkennungssystem einem abgespeicherten Code zugeordnet werden, so wird dieser Code durch das Spracherkennungssystem 4 an den Mikroprozessor 5 weitergegeben. Der Mikroprozessor 5 wählt nun die zu dem Benutzercode im Speicherelement 2 abgespeicherten benutzerspezifischen Systemparameter aus und stellt das Audiosystem entsprechend ein. Hierzu gibt der Mikrocomputer 5 beispielsweise entsprechende Signale an Stellglieder 11 zur Einstellung der Lautstärke, der Balance oder des Klanges. Vom Mikroprozessor 5 können benutzerspezifische Systemparameter auch an andere nicht näher dargestellte Komponenten 12 des Audiosystems ausgegeben werden, beispielsweise zur Einstellung eines bevorzugten Radiosenders. Das Audiosignal mit den benutzerspezifischen Systemeinstellungen wird über einen Audioverstärker 13 an einen oder mehrere Lautsprecher 14 ausgegeben.

Insbesondere aus Kostengründen werden die Mittel zur Identifizierung des Benutzers in der Regel nicht ausschließlich mit einem Audio system zusammenarbeiten. Gerade ein Spracherkennungssystem wird insbesondere im wesentlichen aus Gründen der Fahrberechtigungskontrolle im Fahrzeug vorhanden sein. Es kann dann aber für die Einstellung der benutzerspezifischen Systemparameter des Audio systemes mitbenutzt werden.

## Patentansprüche

1. Audio system (1) eines Kraftfahrzeuges mit einer Bedieneinheit (6) zur Einstellung von Systemparametern durch einen Benutzer, wobei
- das Audio system mit einem Speicherelement (2) zur Abspeicherung benutzerbezogener Systemparameter und
- Mitteln (3, 4) zur Identifizierung des Benutzers in Wechselwirkung steht, die auf Spracherkennung beruhen sowie
- mit dem Speicherelement (2) und den Mitteln (3, 4) zur Identifizierung des Benutzers verbundene weitere Mittel (5) zur Auswahl und Einstellung der abgespeicherten benutzerbezogenen Systemparameter des Benutzers als aktuelle Parameter des Audio systems enthält.

2. Audio system nach Anspruch 1, **dadurch gekennzeichnet, dass** das Speicherelement (2) Bestandteil des Audio systems (1) ist.

3. Audio system nach Anspruch 1, **dadurch gekennzeichnet, dass** es sich um ein externes Speicherelement (2) handelt.

4. Verfahren zur Einstellung von benutzerbezogenen Systemparametern eines Audiosystems (1) eines Kraftfahrzeuges, wobei der Benutzer auf Grund von Spracherkennung identifiziert wird; abhängig vom identifizierten Benutzer Systemparameter aus einem Speicherelement (2) ausgelesen werden; das Audiosystem (1) mit den ausgelesenen Systemparametern eingestellt wird.

## Claims

1. Audio system (1) in a motor vehicle having a control unit (6) for a user to set system parameters, wherein
- the audio system interacts with a memory element (2) for storing user-related system parameters and with
- means (3, 4) for identifying the user which are based on voice recognition, and
- contains further means (5), which are connected to the memory element (2) and to the means (3, 4) for identifying the user, for selecting and setting the stored user-related system parameters for the user as current parameters for the audio system.

2. Audio system according to Claim 1, **characterized in that** the memory element (2) is a component part of the audio system (1).

3. Audio system according to Claim 1, **characterized in that** an external memory element (2) is involved.

4. Method for setting user-related system parameters in an audio and/or navigation system (1) in a motor vehicle, wherein the user is identified on the basis of voice recognition; system parameters are read from a memory element (2) on the basis of the user identified; the audio and/or navigation system (1) is set using the system parameters which have been read.

## Revendications

1. Système audio (1) d'un véhicule automobile comprenant une unité de commande (6) pour le réglage de paramètres de système par un utilisateur,
dans lequel,
- le système audio est en relation d'interaction avec un élément de mémoire (2) pour la mémorisation de paramètres de système spécifiques de l'utilisateur et
- avec des moyens (3, 4) d'identification de l'utilisateur qui reposent sur la reconnaissance vocale,
- avec d'autres moyens (5) reliés à l'élément de mémoire (2) et aux moyens (3, 4) d'identification de l'utilisateur, pour la sélection et le réglage des paramètres de système mémorisés et spécifiques de l'utilisateur, en tant que paramètres actuels du système audio.

2. Système audio selon la revendication 1, **caractérisé en ce que** l'élément de mémoire (2) est une partie constitutive du système audio (1).

3. Système audio selon la revendication 1, **caractérisé en ce qu'**il s'agit d'un élément de mémoire externe (2).

4. Procédé pour le réglage de paramètres de système, spécifique à l'utilisateur, d'un système audio et/ou d'un système de navigation (1) d'un véhicule automobile, dans lequel l'utilisateur est identifié par une reconnaissance vocale ; des paramètres de système sont lus dans un élément de mémoire (2) en fonction de l'utilisateur identifié ; le système audio (1) est réglé avec les paramètres de système lus.
